(19) Europäisches Patentamt
European Patent Office
Office européen des brevets

(11) Veröffentlichungsnummer: **0 115 626**
**A2**

(12) # EUROPÄISCHE PATENTANMELDUNG

(21) Anmeldenummer: **83113053.9**

(22) Anmeldetag: **23.12.83**

(51) Int. Cl.³: **C 09 B 62/09**, D 06 P 3/66

(30) Priorität: **07.01.83 DE 3300373**

(43) Veröffentlichungstag der Anmeldung: **15.08.84 Patentblatt 84/33**

(84) Benannte Vertragsstaaten: **CH DE FR GB IT LI**

(71) Anmelder: **BASF Aktiengesellschaft, Carl-Bosch-Strasse 38, D-6700 Ludwigshafen (DE)**

(72) Erfinder: **Krueger, Heinz, Dr., Londoner Ring 4, D-6700 Ludwigshafen (DE)**

(54) **Reaktivfarbstoffe.**

(57) Die Erfindung betrifft Reaktivfarbstoffe, die in Form der freien Säuren der allgemeinen Formel I

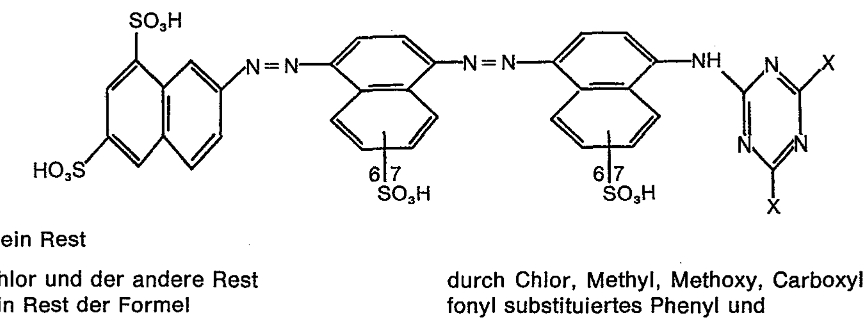

entsprechen, in der ein Rest

X Fluor oder Chlor und der andere Rest
X Chlor oder ein Rest der Formel

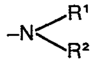

sind, wobei
$R^1$ Wasserstoff, $C_1$- bis $C_4$-Alkyl oder gegebenenfalls durch Chlor, Methyl, Methoxy, Carboxyl oder Hydroxysulfonyl substituiertes Phenyl und
$R^2$ Wasserstoff oder $C_1$- bis $C_4$-Alkyl sind und die Sulfogruppen im zweiten und dritten Naphthalinring unabhängig voneinander in 6- oder 7-Stellung stehen.

Die erfindungsgemäßen Verbindungen eignen sich sehr gut zum Färben von hydroxylgruppenhaltigen Fasern.

EP 0 115 626 A2

Reaktivfarbstoffe

Die Erfindung betrifft Reaktivfarbstoffe, die in Form der freien Säuren der allgemeinen Formel I

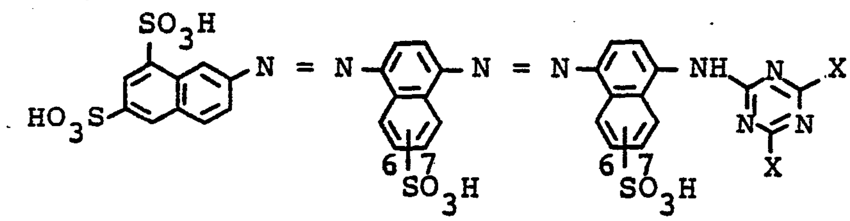

entsprechen, in der ein Rest

X Fluor oder Chlor und der andere Rest

X Chlor oder ein Rest der Formel $-N{<}^{R^1}_{R^2}$ sind, wobei

$R^1$ Wasserstoff, $C_1$- bis $C_4$-Alkyl oder gegebenenfalls durch Chlor, Methyl, Methoxy, Carboxyl oder Hydroxysulfonyl substituiertes Phenyl und

$R^2$ Wasserstoff oder $C_1$- bis $C_4$-Alkyl sind und die Sulfogruppen im zweiten und dritten Naphthalinring unabhängig voneinander in 6- oder 7-Stellung stehen.

Zur Herstellung der Verbindungen der Formel I kann man z. B. Verbindungen der Formel

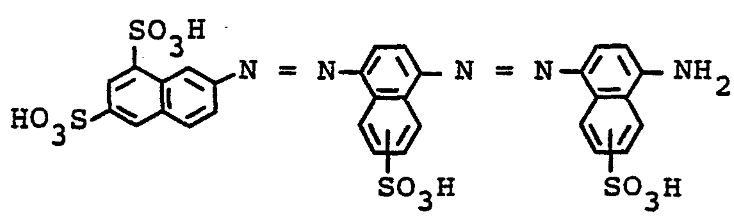

nach an sich bekannten Methoden mit Triazinderivaten der Formel

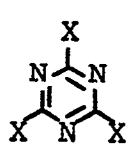

umsetzen.

Bg/P

Die Verbindungen der Formel I eignen sich zum Färben von hydroxylgruppenhaltigen Materialien, insbesondere von Baumwolle, Zellwolle und auch Seide. Man erhält Brauntöne mit guten Echtheiten. Hervorzuheben sind die hervorragenden Löslichkeiten der Verbindungen der Formel I, die sie sehr gut für die sogenannte Kurzflottenfärbeweise geeignet machen.

Von besonderer Bedeutung sind Verbindungen der Formel I, bei denen ein Rest X Chlor ist und der andere sich von einem primären Amin oder vorzugsweise Ammoniak ableitet.

Bevorzugt ist weiterhin, bei der Herstellung der Verbindungen der Formel I für die zweite Naphthalinkomponente ein Gemisch der 6- und 7-Sulfoverbindung zu verwenden.

In den folgenden Beispielen beziehen sich Angaben über Teile und Prozente, sofern nicht anders vermerkt, auf das Gewicht.

Beispiel 1

30,3 Teile 2-Aminonaphthalin-6,8-disulfonsäure werden in 300 Teilen Eiswasser mit 6,9 Teilen Natriumnitrit und 30 Teilen 5N-Salzsäure 2 Stunden bei 0 - 5 °C diazotiert. Nach dem Zerstören überschüssigen Natriumnitrits mit Amidosulfonsäure wird mit 22,3 Teilen 1-Amino-naphthalin-6/7-sulfosäure versetzt und mit 13,5 Teilen Natriumhydrogencarbonat bei pH 3 - 4 gekuppelt. Nach erneuter Diazotierung mit 26 Teilen 5N-Salzsäure und 7,1 Teilen Natriumnitrit werden nach der Zerstörung überschüssigen Natriumnitrits 22,3 Teile 1-Aminonaphthalin-6-sulfosäure zugegeben und mit 13 Teilen Natriumhydrogencarbonat ein pH-Wert von 2 - 3 eingestellt. Sobald keine Diazoverbindung mehr nachweisbar ist, wird mit einer feinen Suspension von 20 Teilen Cyanurchlorid in 200 Teilen Eiswasser versetzt. Durch portionsweise Zugabe von 18 Teilen Natriumhydrogencarbonat wird die Reaktionslösung 2 Stunden bei pH 4 - 5 gehalten. Dann wird mit 26 Teilen 25 %

Ammoniaklösung versetzt, 2 Stunden bei 45 °C gerührt und der gebildete Farbstoff durch Sprühtrocknung der Reaktionslösung isoliert. Er färbt Baumwollgewebe in rotstichig-braunen Tönen. Weitere erfindungsgemäße Farbstoffe mit rotstichigbrauner Nuance können der folgenden Tabelle entnommen werden, wobei die Spalten I und II die Stellung der Sulfogruppen in den verwendeten Clevesäuren und die Spalte III das anstelle von Ammoniak verwendete Amin wiedergeben.

| Bsp. | I | II | III |
|---|---|---|---|
| 2 | 6 | 6/7 | $NH_3$ |
| 3 | 6/7 | 6/7 | $NH_3$ |
| 4 | 6 | 6 | $NH_3$ |
| 5 | 6/7 | 6/7 | Anilin |
| 6 | 6/7 | 6 | o-Toluidin |
| 7 | 6 | 6 | N-Methylanilin |

Beispiel 8

Eine gemäß Beispiel 1 erhaltene Lösung von 86 Teilen 1-Amino-4[4'-(6",8"-disulfonaphthyl-2"-azo)-6',7'-sulfonaphthyl-1'-azo]-naphthalin-6-sulfonsäuretetranatriumsalz in 750 Teilen Wasser wird auf 0 °C gekühlt und tropfenweise mit 14 Teilen Cyanurfluorid versetzt, das zweckmäßigerweise mit 50 Teilen eines organischen Lösungsmittels wie z. B. Toluol, Chlorbenzol oder Eisessig verdünnt wurde, wobei gleichzeitig durch Zutropfen einer 2N-Sodalösung ein pH von 6 - 7 eingestellt wird. Nach beendeter Reaktion wird mit 11 Teilen 2-Methylanilin versetzt und zwei Stunden bei 20 - 25 °C gerührt, wobei ein pH von 6 - 7 durch Zugabe von 2N-Sodalösung eingestellt wird. Der so erhaltene Farbstoff wird mit Kaliumchlorid gefällt und schonend getrocknet. Er färbt Baumwollgewebe in echten rotstichig braunen Tönen.

Weitere erfindungsgemäße Farbstoffe derselben Nuance sind in der folgenden Tabelle aufgeführt, wobei die Spalten I und II die Stellung der Sulfogruppen in den verwendeten Clevesäuren und die Spalte III das anstelle von 2-Methylanilin verwendete Amin wiedergeben.

| Bsp. | I | II | III |
|---|---|---|---|
| 9 | 6/7 | 6 | $NH_3$ |
| 10 | 6/7 | 6 | 2-Ethylanilin |
| 11 | 6/7 | 6 | 2-Methyl-6-ethylanilin |
| 12 | 6 | 6 | $NH_3$ |
| 13 | 6 | 6 | 2-Methylanilin |
| 14 | 6/7 | 6/7 | 1-Aminonaphthalin |
| 15 | 6 | 6/7 | $NH_3$ |

Patentansprüche

1. Reaktivfarbstoffe, die in Form der freien Säuren der allgemeinen Formel I

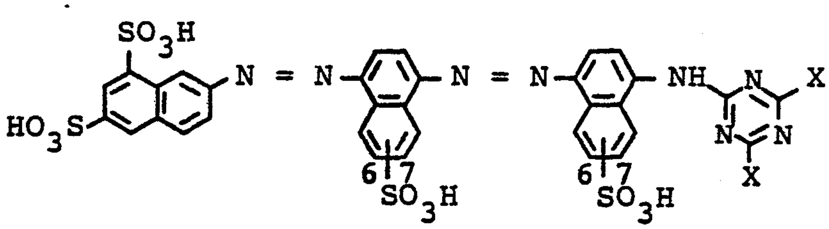

entsprechen, in der ein Rest

X Fluor oder Chlor und der andere Rest

X Chlor oder ein Rest der Formel 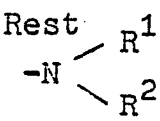 sind, wobei

$R^1$ Wasserstoff, $C_1$- bis $C_4$-Alkyl oder gegebenenfalls durch Chlor, Methyl, Methoxy, Carboxyl oder Hydroxysulfonyl substituiertes Phenyl und

$R^2$ Wasserstoff oder $C_1$- bis $C_4$-Alkyl sind und die Sulfogruppen im zweiten und dritten Naphthalinring unabhängig voneinander in 6- oder 7-Stellung stehen.

2. Verbindung gemäß Anspruch 1, wobei ein X Chlor und das andere Amino ist.

3. Verwendung der Verbindungen gemäß Anspruch 1 zum Färben von hydroxylgruppenhaltigen Fasern.